(19) 

Europäisches
Patentamt
European
Patent Office
Office européen
des brevets

(11) **EP 2 860 672 A2**

(12) **EUROPEAN PATENT APPLICATION**

(43) Date of publication:
**15.04.2015 Bulletin 2015/16**

(51) Int Cl.:
***G06N 99/00*** *(2010.01)*

(21) Application number: **14188329.8**

(22) Date of filing: **09.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.10.2013  IL 22883313**

(71) Applicant: **Deutsche Telekom AG**
**53113 Bonn (DE)**

(72) Inventors:
• **Shapira, Bracha**
**8472811 Beer Sheva (IL)**

• **Bar, Ariel**
**Ashdod (IL)**
• **Grolman, Edita**
**8458503 Beer Sheva (IL)**
• **Dayan, Aviram**
**8496500 Omer (IL)**
• **Rokach, Lior**
**8496500 Omer (IL)**

(74) Representative: **Maiwald Patentanwalts GmbH**
**Elisenhof**
**Elisenstrasse 3**
**80335 München (DE)**

(54) **Scalable cross domain recommendation system**

(57)     A method for generating recommendation for a target domain based on data from other source domains is provided, comprising the steps of: aggregating data in each of said other domains; splitting said aggregated data to a train data set, a validation data set and a test data set; extracting patterns in each of said source domains; transferring said extracted patterns from said source domains to said target domain while testing different models and learning the best model; and generating recommendation for said target domain according to said learned best model.

Fig. 1

**Description**

**Field of the Invention**

The invention is in the field of recommendation system. More specifically the invention relates to the field of multi area learning transfer recommendation system.

**Background of the Invention**

The use of different portals for consuming content in a variety of fields is a standard in the modern life. Almost everybody have an account through which he acquire content such as music, movies, books etc. in most portals there is usually a recommendation system which can recommend to the user on similar things according to the features of the items that are chosen. However, most of the recommendation systems today are naive recommendation system which can recommend to a person only if there is enough information about the user taste and only according to mutual users or items. For example, if a user choses to hear rock music, the recommendation system recommends on other songs which are also rock music and usually with some similar features according to the content of the music. Another aspect is that if two different users are consuming many things in mutual the system recognizes that they have similar taste and therefore the system probably recommends on some item that one user has chosen to the second user. But, in case where a user wants to receive recommendations on a totally new field which he never touched before, the recommendation system is incapable to provide recommendations.
Cross domain recommendation is a technique where the recommendation system can recommend to the user in a specific domain based on the knowledge existed in a different domain.
It is therefore a purpose of the present invention to provide a method and system for recommendations in one domain (herein after target domain) based on a knowledge existed in another domain (herein after source domain).
Further purposes and advantages of this invention will appear as the description proceeds.

**Summary of the Invention**

In one aspect the present invention relates to a method for generating recommendation for a target domain based on data from other source domains, comprising the steps of: a) aggregating data in each of said other domains; b)splitting said aggregated data to a train data set, a validation data set and a test data set; c)extracting patterns in each of said source domains; d)transferring said extracted patterns from said source domains to said target domain while testing different models and learning the best model; and e)generating recommendation for said target domain according to said learned best model.
In an embodiment of the invention, in the train data set a model for each source domain is created iteratively to predict the rating of the user in source domains.
In an embodiment of the invention, in the validation data set the models created in the train part are evaluated and consequently the most suitable model is selected.
In an embodiment of the invention, the test data set is used for comparison between said model created in said train data set and other models.
In a another aspect the invention relates to a system for generating recommendation for a target domain based on data from other domains, comprising: a) a rating events aggregator module, which aggregate the events in each source domain, calculates the ratings and provides a normalized data set of ratings; b) a ratings dataset splitter module, which divides randomly the said aggregated ratings dataset into three separated dataset: training set, validation set and test set; c) a dense dataset extractor module, which extracts a dense sub ratings dataset from said training and validation datasets; d) a CodeBook Construction module, which generates a codebook from a source domain that discovers the ratings patterns to be transferred later to the target domain; e) a CodeBook Closeness module, which calculates closeness measures between user clusters and item clusters in a given codebook; f) a Multiple Domains CodeBook Transfer (MDCBT) module, which generates a model that predicts the ratings on the target domain; g) a MDCBT Wrapper module, which selects a subset form, to source domains code books, for said target domain, while improving the final model accuracy; and h) an on-line Recommendation Engine module, which generates a recommendation for the target domain.
All the above and other characteristics and advantages of the invention will be further understood through the following illustrative and non-limitative description of embodiments thereof, with reference to the appended drawings. In the drawings the same numerals are sometimes used to indicate the same elements in different drawings.

**Brief Description of the Drawings**

- Fig. 1 schematically shows the method of the present invention according to an embodiment of the invention;
- Fig. 2 schematically shows the system of the present invention according to an embodiment of the invention;
- Fig. 3 schematically shows an example code for the codebook construction module of the present invention according to an embodiment of the invention;
- Fig. 4 schematically shows an example code for the Multiple Domains Code Book Transfer step of the present invention according to an embodiment of the invention; and
- Fig. 5 schematically shows an example code for the MDCBT Wrapper module of the present invention according to an embodiment of the invention.

**Detailed Description of Embodiments of the Invention**

The present invention relates to a cross domain recommendation system and method. The system of the invention provides well quality recommendations to user without relating to the content. The recommendation system only needs minimal initial information, such as one selection of items or content of a user in any domain' that is sufficient for the system of the invention to provide the user recommendations in totally different domains, which have no mutual people or no mutual content with the initial selection of the user. Actually, the method and system of the invention generates recommendations to a target domain which contains a small amount of data (very sparse domain). Sparsity reduces the accuracy of the recommendations.
The present invention extracts patterns from other domains (source domain) with sufficient amount of data, and utilizes these patterns to improve the accuracy of the recommendation in the target domain.
For example: a user selects to hear a specific song i.e. an item in a music domain and based on this selection the system provides to the user a recommendation in a totally different domain such as cooking.
The cross domain recommendation system is based on transfer learning and on information clustering. Therefore even some very basic initial information is enough to cluster said information and to provide recommendations to the user in domains and areas that are different from the initial information.

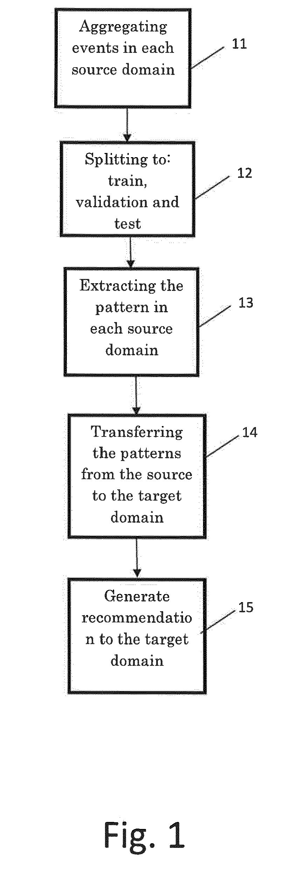

Fig. 1 is a schematic diagram which describes the method of the invention.
The first step 11 is to aggregate the transactions/events in each source domain. A user provides at least minimal information, i.e., one selection of an item, no matter what item it is and from what domain it is. The selection of the item can be by buying said item or by clicking on an item or it can be by rating an item, for example grading an item with "like", "dislike" or number of stars (i.e., 5 stars) etc... Selection can be any type of event/transaction that the user performs on a given item: (clicking, buying, adding to cart, etc.) or providing an explicit rating score to the item in any rating system schema (e.g.: a like/dislike schema or a 5 stars schema). In this step, all user-item pairs are events/transactions are aggregated into a single rating score (the system creates an info-cluster matrix).
where all the selections of the user are aggregated, normalized to a continuous scale, which notifies how much the user liked the selection. Then the next step is step 12, splitting the aggregated data set to three parts: train, validation and test. After this aggregation,, the data is divided into three parts. The first part is a train part, the second is a validation part and the third is a test part. In the train part a model for each domain is created iteratively to predict the rating of the user in a target domain, which is a domain in which the system needs to generate a recommendation about. In the validation part the models created in the train part are evaluated and consequently the most suitable model is selected. The test part is used for comparison between the model presented in this invention model and other models that exist in the recommendations field and that where not created by the system and method of the invention.
The next step 13, extracting patterns in each source domain, is to find patterns on the aggregated data. The patterns are found by constructing a codebook for each domain, where all the patterns are collected in a matrix of patterns for each domain. Then the next step 14 is transferring the patterns from the source domain to the target domain. A connection is made between the different patterns and a distance between the patterns is calculated, and the patterns from the source domains are transferred to the target domain. The next step 15 is to generate a recommendation for the target domain, according to the learned model namely, based on the codebooks, the patterns and the distances calculated in the previous steps.

Example 1:

A user registers to a new domain such as music, and he wants the system to provide him recommendations about song. Although the system has only a small amount of information about the user with respect to the music domain, it can provide recommendations to the user based on the information existed in the system in other domains (even if it is minimal information and even if it is not about the user) and based also on information about other users in the different domains. The system first creates an info-cluster matrix, then it constructs a codebook for each domain such as for a games domain, movies domain, camping domain and cooking domain. The system finds patterns (which their meaning is not necessary clear) and connects between the patterns by calculating the distance between them. Then, by the connections made between the patterns, the system recognizes the patterns that the user is associated to and generates a recommendation based on said patterns.

The method learns global /generic patterns from the source domains.

These patterns are than applied to users in the target domain - for each user/item the method identifies which pattern is most relevant according to the limited amount of data in the target domain

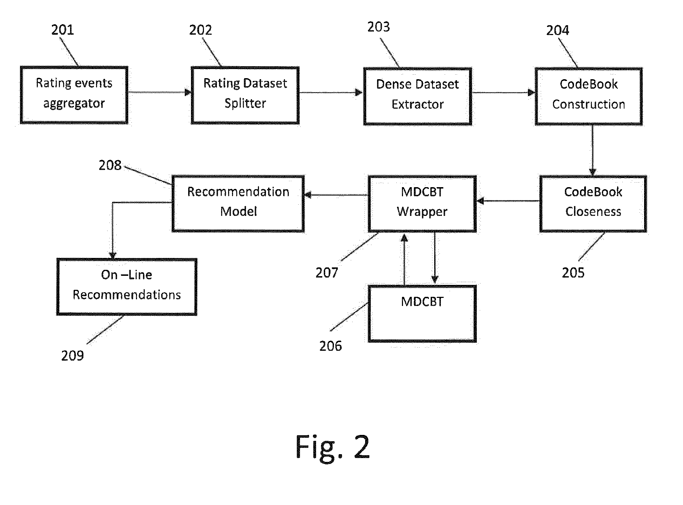

Fig. 2 describes the system of the present invention according to an embodiment of the invention. A schematic flowchart of the system of the invention is presented. The flowchart shows the main modules which carry out the system and method of the invention.

Block 201 of the Events/Ratings Aggregator module aggregate the transactions/events in each source domain and relates to an algorithm which is designed to convert the available set of user-item events/ratings into a regular Collaborative Filtering (CF) recommendation system dataset. This conversion is required since most CF recommendation systems algorithms take as an input a dataset in the following format: <user-id, item-id, rating>. In this algorithm, for every available user-item pair, both implicit and explicit feedbacks are combined to generate a single rating. The implicit feedback is discovered from the set of events (e.g.: user buys or clicks an item). The explicit feedback is provided by user ratings that can be either Boolean (like/dislike) or on a certain scale (e.g.: "5 star" rating schema). Notice that most of the data contains implicit feedback, so at the first phase a baseline implicit rating is generated (taking into consideration all associated events); while on the next step the rating is modified according to the explicit rating (if available).

For every user-item pair in the events based dataset first the implicit rating based on the events is calculated as presented in equation 1.

$$\text{implict\_rating}_{u,i} = \sum\nolimits_{\text{all relvant events}} \frac{EW[e_{\text{evet\_type\_id}}]}{(1+\gamma)^{\Delta t}} \quad (1)$$

The algorithm summarizes all the relevant events of the given pair (events that user u performed on item i) as the algorithm takes into consideration the event type donated by EW. EW is the weight of each event type in the system e.g.: a "buy" event equals 1 point, while "click" event equals 0.2 point. The actual weights are determined by a domain expert.

The time which the event took place using an aging factor where, $\Delta t$ indicates the time difference between a baseline date (e.g.: present date) and the date in which the event occurred in a given time unit (days, week, months, etc.) and $\gamma$ is a positive control parameter (larger value to this parameter gives more weight to the latest events).

After aggregating all events, the summation is normalized to a 0...1 continuous scale, indicating the degree of confidence that this user likes the item. Notice that since many recommendation system algorithms do not handle very well ratings with value "0", the algorithm of the invention applies a normalization function NF: [0...1] $\rightarrow$ [minVal...maxVal] which takes a rating between 0 and 1 and "stretches" it linearly to positive range (e.g.: a 2 to 5 range). If the current pair does not have an exlicit rating, this is the final aggregated rating, otherwise the implicit rating is boosted by multiplying it with a tuning factor which is a function of the given rating prior to activiting the normilzation function. Possible tunning factors for a 1-5 star rating schema can be {0, 0, 1, 1.5, 2}, with a cutoff if the the result exceeds "1".

The next block 202 is the Ratings Dataset Splitter module which is an algorithm component that divides randomly the aggregated ratings dataset into three separated dataset as described above: training set, validation set and test set. The training set is used for building codebooks and MDCBT ("Multiple Domains CodeBook Transfer") models for the recommendation system in iterative process, the validation set is used to evaluate the intermediate models to avoid over-fitting, and use the test set to evaluate the final generated models. The splitting process is performed from the user perspective, as the ratings of each user are split according the required splitting ratio (typically a 64:16:20 percentage ratio for training, validation and test). This approach is guarantees a balanced split from the user perspective. The splitting process for each user is performed using a random number generator and controlled by a seed parameter which enables receiving different splits with different values.

The next block 203, is the Dense Dataset Extractor module. Real life and commercial dataset can be extremely sparse - e.g.,: more than 99.9%. ; accordingly, co-clustering algorithms, which are used for CodeBook construction, will have difficulties to generate meaningful patterns. To overcome this obstacle a dense sub ratings dataset is extracted from the training and validation datasets using the following two heuristics:

High profile heuristic - in this approach first the users and items are discovered with more than a certain threshold number of ratings in the training and validation datasets (considering these users/items have a high profile); and second the ratings are extracted which belong to these two users and items lists.

Co-clustering heuristics - in this approach a variant of the CodeBook Construction algorithm is used to identify a set of dense areas in the full ratings dataset.

The next block 204, of the CodeBook Construction module, generates a codebook from a source domain (which is one of the domain the system and method of the invention use in order to generate a recommendation for the target domain which the user expect the system to provide him recommendations about), discovering the ratings patterns to be transferred later to the target domain. The codebook is a KxL matrix specifying the common rating for each user-item group. In addition, by-products of this algorithm are users and items clusters maps: U is a vector specifying for each user in the source domain his associate user-cluster index (ranges from 0 to K-1); and V is a symmetric vector, mapping each item to an item-cluster index (0 to L-1). The CodeBook is generated via the general co-clustering approach suggested in Papadimitriou, S., & Sun, J. (2008, December). using the optimization problem presented in equation "2" which aims to minimize the error between the actual rating in the training dataset (ST) and the relevant codebook pattern.

$$\min_{U,V,B} \sum_{ST} (ST_{uid,iid} - B \, [U_{uid}][V_{iid}])^2 \qquad (2)$$

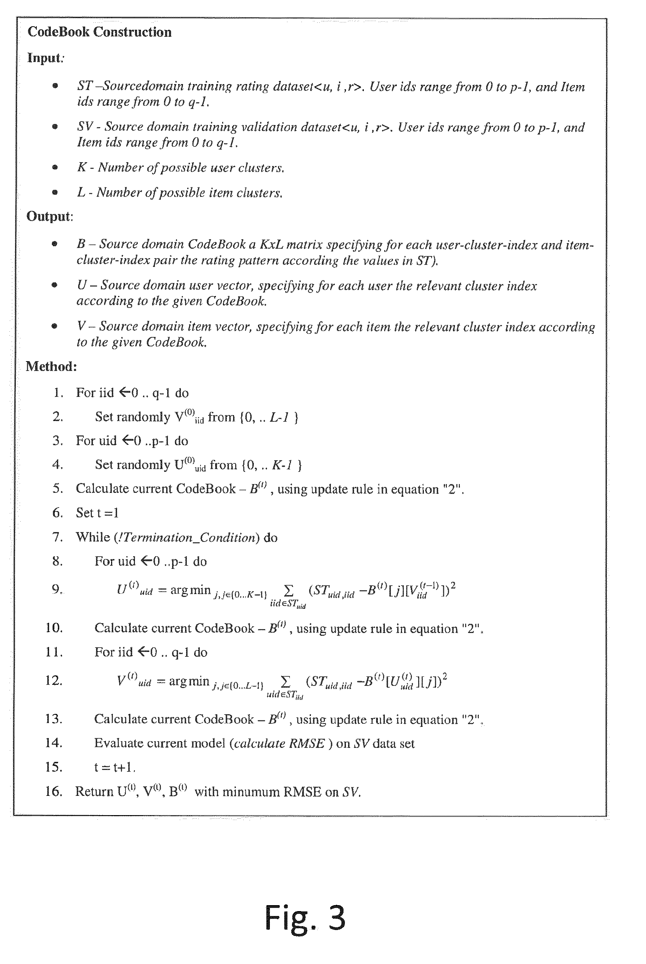

Fig. 3 schematically shows a pseudo-code implementing the method of constructing the codebook of the invention according to an embodiment of the invention. The inputs of the algorithm are source domain datasets (training - ST and validation - SV), and the dimensions of the required codebook (which is a KxL matrix, K- number of user clusters, L - number of item clusters). The outputs of the algorithms are the codebook matrix B and the clustering vectors U and V. In lines 1-5 set a random cluster index is set for each user and item in ST and the initial codebook is calculated: each element Bij in the matrix is set to the average rating of all the relevant samples in ST (i.e.: the ratings of which user-cluster index is set to i, and item-cluster index is set to j). Next, an iterative process of co-clustering and pattern discovering is started (lines 6-15). Each of the iterations consists of three parts:

1) According to current V and B values the optimal cluster-index is found for each user (lines 8-9), minimizing the total error between the user's actual ratings and the predicted ones using the current model ;

2) In lines 11-12 the optimal V values are found while fixing the current U and B. at the end of those first two phases, the codebook is updated according to equation 3 (lines 10 and 12);

3) the accuracy of the current model is evaluated ($U^{(t)}$,$V^{(t)}$ and $B^{(t)}$), by calculating the RMSE (RMS Error) measured on the SV (line 14). After reaching a termination condition, the code returns the model with the minimum RMSE on SV (line 15). The termination condition is either after predefined T iterations; OR after two successive iterations with no improvement in the accuracy on SV (resolving overfitting issues); OR after an iteration which improved the accuracy on SV, but RMSE improvement is less than a certain threshold (early stop condition, saving computational resources).

$$B_{i,j} = \frac{\sum_{ST \,/\, U_{uid}=i \wedge V_{iid}=j} ST_{uid,iid}}{\| ST \,/\, U_{uid}=i \wedge V_{iid}=j \|} \qquad (3)$$

In order to make the algorithm more scalable the following enhancements are used:

1. Using byte array to store U and V vectors (rather than a sparse matrices).

2. Preprocess the computations for updating codebook matrix values in lines 10 and 13 in the pseudo-code during the cluster discovery of users and items.

3. Applying high level of parallelism in each of the three phases of each iteration:

a. "U update" phase (lines 8-10) - distribute users to different "components" simultaneously.

b. "V update" phase (lines 11-13) - distribute items to different "components" simultaneously.

c. "Evaluate SV" phase (line 14) - distribute users to different "components" simultaneously and aggregate the total errors.

The general term "components" is used to indicate that it is possible to use several parallelism mechanisms for this task. The pseudo-code in Fig. 3 implements this by Thread Pools and Hadoop (Map-Reduce).

The presented co-clustering algorithm with the following variants can be used as a heuristic for discovering dense dataset areas:

1. The ratings value in ST and SV ratings dataset are replaced with indicators which state that a rating for this user and item exists (ratings values are replaced with "1" values).
2. The Denominator in equation 2 is replaced with the size of the cluster (number of user multiplied by the number of items associated to this cluster).
3. The resulted codebook values indicate the density level of each cluster, so these values can be used to discover the densest areas and join them together.

Block 205 is the CodeBook Closeness module. This block calculates closeness measures between user clusters and item clusters in a given codebook. Closeness measures between user/item clusters are required calculations in different parts of the system of the invention, including guiding the search heuristics in the MDCBT algorithm and finding the top S users/items for a target user/item. The User Cluster Closeness Measure (UCCM) is computed as the complementary value of the normalized Euclidean distance between the user-cluster vectors in the code book as presented in equation 4, where B is the codebook matrix and Norm is the maximum rating in the system of the present invention (typically 5). A similar measure is defined for Item Clusters Closeness Measure (ICCM). After computing all possible closeness measures for each pair wise cluster, for each cluster the other corresponding clusters is sorted in descending order according to the computed closeness measures.

$$UCCM(i,j) = 1 - \frac{\sum_{l=0}^{L-1}(B_{i,l} - B_{j,l})^2}{Norm} \quad (4)$$

$$ICCM(i,j) = 1 - \frac{\sum_{k=0}^{K-1}(B_{k,i} - B_{k,j})^2}{Norm}$$

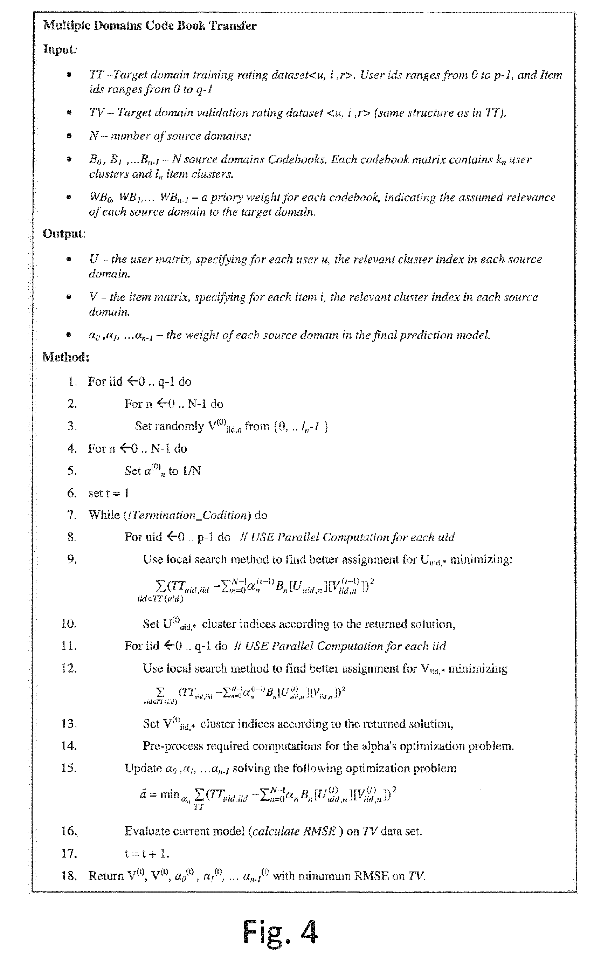

The next block 206 is the Multiple Domains CodeBook Transfer (MDCBT) module. Fig. 4 schematically shows a pseudo-code which implements the algorithm that is applied in the MDCBT block, 206.

This is a very important learning algorithm in the system of the present invention. Based on the codebooks generated from multiple source domains, the block 206 of the MDCBT generates a model that predicts the ratings on the target domain. The codebooks from the different source domains discover patterns of how certain clusters (groups) of users rate different clusters (groups) of items; in this algorithm this knowledge is transferred or projected to the target domain. For each user and item in the target domain, the MDCBT block associates the most relevant clusters in each source domain according to the given codebooks (the U and V cluster matrices in the pseudo-code), in addition the MDCBT algorithm applied in block 206, determines the global relevance of each source domain to the target domain (the alphas' vector in the pseudo-code). The baseline algorithm approach relies on the algorithm of "Moreno, O., Shapira, B., Rokach, L., & Shani, G. (2012, October). TALMUD: transfer learning for multiple domains. In Proceedings of the 21st ACM international conference on Information and knowledge management (pp. 425-434). ACM", however in order to address the challenges of enormous data, the present invention modifies and improves it to become more scalable. The improvements include a compact representation of U and V data-structures; removal of the highly sparse (over 99.6%) indicator based matrix W; avoiding unnecessary and costly linear-algebra matrix operations; applying heuristic search methods; and finally, maximizing the amount code that can run in parallel.

The inputs of the algorithm are the training dataset (TT) and the validation dataset (TV) from the target domain, N source domain codebooks with a priory weights indicating the relevance of each source domain to the target domain. The outputs of the algorithm are the U and V matrices mapping for each user and item in the target domain, the relevant clusters in each domain, and global alphas' vector indicating how to aggregate the source domains codebooks together.

The present invention uses a compact representation for U and V. For each user/item the associated vector in U/V contains the cluster indices directly for each of the N source domains. This compact representation reduces space complexity, and enables to predict the rating that a user (uid) will give to an item (iid) directly, without using costly matrix multiplications. The prediction rule is presented in equation 5. Notice that it is simply need to look at each source domain codebooks relevant matrix indices and summarize the results according to the relevant alphas.

$$\sum_{n=1}^{N} \alpha_n B_n[U_{uid,n}][V_{iid,n}] \quad (5)$$

In order to find U, V and the relevant alphas an optimization problem is defined which aims to minimize the squared error of the model, as presented in equation 6.

$$\min_{U,V,\alpha} \sum_{TT} (TT_{uid,iid} - \sum_{n=1}^{N} \alpha_n B_n [U_{uid,n}][V_{iid,n}])^2 \quad (6)$$

To solve this optimization problem, the following algorithm is used: At first randomly clusters are assigned for each item in V as can be seen in Fig 4, lines 1-3, and initialize all alphas equally (set to 1/N at lines 4-5). In order to find the best model's parameters the rating dataset TT is iterated several times until reaching a termination condition (lines 6-7). Each of the iterations consists of three phases:

a. Iterating all users, and adjusting their cluster indices (U) minimizing the total squared error between the real rating and the predicted rating according to the current other model parameters (lines 8-10).
b. Iterating all items, and adjusting their cluster indices (V) on a similar way (lines 11-13).
c. Updating alphas' solving a set of N linear equations (lines 15-16) as described in TALMUD. The only difference between the algorithm of the present invention and the TALMUD algorithm in the context of updating the alphas is that the preprocess stage of setting all linear equations' coefficients can be performed while updating the V matrix at the previous phase (line 14). This improvement reducers the requirement for additional run over TT in every iteration.

Notice that in all new optimizations the method of the invention is not required to rely on the W matrix from TALMUD, as the ratings on TT are scanned directly and ignoring missing values, this improvement removes the necessity of costly operations since W is very sparse.

Additional major difference between this algorithm and prior art of Talmud algorithm, is the method for adjusting a specific user/item cluster vector. TALMUD uses a brute force search iterating all cluster indices combinations (exponential run-time complexity). In the present invention local search methods are used, which are considered much more run-time efficient then the brute force approach (linear run-time complexity), however less accurate as these approaches find only suboptimal solutions rather than optimal ones. The following paragraph summarizes the main concept behind each local search method:

• Best First Separated Domains Search - in this method the best user/item cluster in each domain is searched independently. The motivation is to decrease the error of each one of n-components in the prediction rule separately, and by that minimize the total error. Next, all codebook source domains are combined using the current alpha values to find the current best observed clusters.
• Best First Simultaneous Domains Search -this method starts with a random cluster assignment (for all domains), and then better solutions are searched for, each time by modifying one of the source domain indices and selecting the best cluster for that source domain. This method is different from the previous one, in that it evaluates the entire model (of that user) and not just a part of it. The order of selecting domains for the search is determined by the "a priory" weight associated to each codebook (see next section for more details). The evaluation heuristic guiding the search is a standard MSE minimization function as presented in equation 7.

$$MSE\_FUNCTION(U_{uid}) = \frac{\sum_{iid \in TT_{uid}} (TT_{uid,iid} - \sum_{n=1}^{N} \alpha_n B_n [U_{uid,n}][V_{iid,n}])^2}{TT_{uid}} \quad (7)$$

• Hill Climbing Search - this method starts with a random cluster assignment and at each step the following steps are applied: (1) all immediate neighbor solution are generated (solutions which are different from the current one at exactly one cluster index from the N source domains); (2) all neighbors are evaluated; (3) the best neighbor is selected and the search continues with said selection. The search stops after a certain amount of iterations or when getting stuck at a local minima. Equation 7 is used to guide the search. It is possible to repeat this process if necessary with different initial cluster assignment.
• Simulated Annealing Search - this is a stochastic search method, which is similar to hill-climbing, but allows selection of neighbors with larger errors than the current solution (with a certain and dynamic probability), in order to discover more areas on the search space. It is possible to repeat this process if necessary with different initial cluster assignment.

- Notice that some of the local search algorithms (in particular: Best First Simultaneous Domains Search, Hill Climbing Search, and Simulated Annealing Search) start with an initial random cluster assignment, however along with running "N" times the MDCBT algorithm with a single source domain - each time in a different domain (as will be presented in the following MDCBT Wrapper section), this method has an initial cluster assignment per each domain. This assignment can be used instead of one of the random solutions these local search algorithms mentioned above.
- Closest Cluster - this method starts with the initial clusters assignment vector on all code books from - this cluster assignment origins from the initial best cluster that was found separately for each domain. Then this method starts to search for better solutions, similar to the previous methods mentioned - this method evaluates the entire model (of that user) and not just a part of it. At each step the following steps are applied:

1) The closest clusters solutions are generated for each source domain (using the outputs of the CodeBook Closeness algorithm results);
2) all full combinations of the closest clusters are generated to the initial full cluster;
3) a random subset evaluates all closest clusters; and
4) the best cluster is selected and the search continues with it. The search stops after a certain amount of iterations or when getting stuck at local minima. Equation 7 to is used guide the search.

At the end of each of the iterations the current model is evaluated on TV, in order to avoid of overfitting (line 16). Finally the block of MDCBT 206, returns the solution with minimum RMSE on TV. The termination condition is either after predefined T iterations; OR after two successive iterations with no improvement in the accuracy on TV (resolving overfitting issues); OR after an iteration which improved the accuracy on TV, but RMSE improvement is less than a certain threshold (early stop condition, saving computational resources).

As described in the codebook construction parallelism (Thread Pools and Hadoop Map-Reduce) mechanisms are used in order to:

- Improve the U matrix simultaneously for a batch of users.
- Improve the V matrix simultaneously for a batch of items.
- Preprocess the required elements for the alpha's optimization problem simultaneously after updating the V matrix of a certain item.
- Evaluate the current model on the validation set.

Block 207 is the MDCBT Wrapper module. This block performs an algorithm which is designed to select a subset form, to source domains code books, for the target domain, while improving the final model accuracy. Prior art on CBT algorithms show that not all source domains generate code books which are fitted for the knowledge transfer. In addition, given a set of "good" N codebooks, the best target model that can be generated doesn't necessarily use all of them, as there might be an overfitting problem. These observations show that there is a need to discover which of given N codebooks are most fitted for the target domain model. It is possible to run over all subset combinations, but this is costly even with a small number of source domains, as training each model consumes a lot of computational resources. The algorithm of the present invention in block 207, uses a step-forward feature selection technique in order to find a subset of codebooks which is a suboptimal solution to the problem of overfitting.

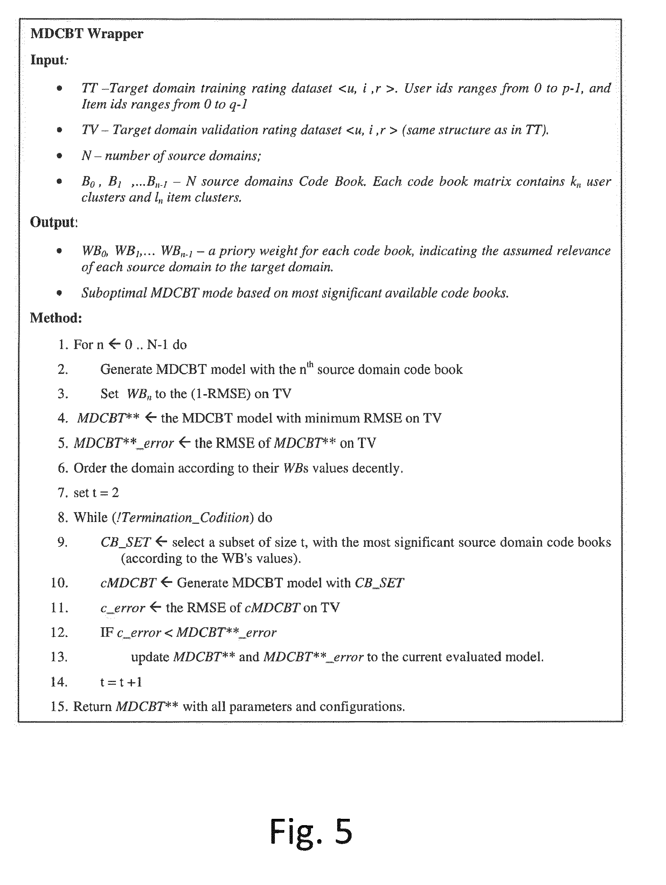

Fig. 5 schematically shows a pseudo-code which implements the algorithm of the MDCBT wrapper block 207, according to an embodiment of the invention. At first (lines 1-3) an MDCBT model is trained with a single domain for each of the available source domains; evaluate the MDCBT model on the validation dataset; and set the "a priory" weight for each source domain codebook to be 1-RMSE (this is the a priory weight associated for each source domain in the MDCBT algorithm). At lines (4-5) the current best model is set to the one with minimum RMSE. Next, an iterative greedy algorithm is started adding more source domain codebooks to the target model (lines 6-8). At iteration number t, the t-most significant domains are selected according to their accuracy, and the current MDCBT model is fully trained with them (lines 9-11), if the new generated model is superior to the current one (RMSE improvement on the validation dataset), it is updated to be the best observed model (lines 12-13), finally t is incremented (line 14). The Termination Condition is reached, if either there are no more source domain codebooks to add, or after two successive iterations without RMSE improvements on the validation dataset. Finally, the best observed model i.e. the recommendation model 208 and its configuration are returned and an on-line Recommendation Engine 209, generates a recommendation for the target domain.

This on-line component is responsible for three tasks: (a) calculating the predicted rating(s) that a target user will have on a specific item/ list of items; (b) generating top k recommendations for a target user; and (c) generating top k similar items for a target item.

For these tasks the on-line recommendation engine loads at startup to the memory the final generated multiple domain MDCBT model (see line 15 on the pseudo-code of Fig. 5), along with the N single domain generated MDCBT models (line 2 of Fig. 5). After loading the models to the memory, a dual-view data-structure of arrays is maintained to retrieve at O(1) of time complexity the following queries: what are the cluster assignments of a target user or item in any of the MDCBT models (single or final models), and which users or items are associated to each cluster assignment.

In the next paragraphs the algorithmic approach for supporting the online recommendation services is described:

- Rating predication - given a target user and a list of items, the predicted ratings are generated according to final generated MDCBT model, using the prediction from equation 5.
- Top K recommendation - given the target user, first the user-cluster assignments is retrieved according the final MDCBT mode, next based on the code book values it is identified which item clusters are expected to receive high ratings values, and finally, a set of items which are associated to these clusters are retrieved.
- Top K Similarities - first the set of items which belong to the same cluster assignment as the target item is retrieved. If this assignment does not include enough, the algorithm moves to the next closest clusters according to the Codebook Closeness algorithm in iterative process. For discovering item similarity inside the target domain the clusters are used in the final MDCBT model, while for cross domain similarities a corresponding single domain MDCBT model is used.

Although embodiments of the invention have been described by way of illustration, it will be understood that the invention may be carried out with many variations, modifications, and adaptations, without exceeding the scope of the claims.

## Claims

1. A method for generating recommendation for a target domain based on data from other source domains, comprising the steps of:

   a. aggregating data in each of said other domains;
   b. splitting said aggregated data to a train data set, a validation data set and a test data set;
   c. extracting patterns in each of said source domains;
   d. transferring said extracted patterns from said source domains to said target domain while testing different models and learning the best model; and
   e. generating recommendation for said target domain according to said learned best model.

2. A method according to claim 1, wherein in the train data set a model for each source domain is created iteratively to predict the rating of the user in source domains.

3. A method according to claim 1 or 2, wherein in the validation data set the models created in the train part are evaluated and consequently the most suitable model is selected.

4. A method according to any one of the preceding claims, wherein the test data set is used for comparison between said model created in said train data set and other models.

5. A system for generating recommendation for a target domain based on data from other domains, comprising:

   a. a rating events aggregator module, which aggregate the events in each source domain, calculates the ratings and provides a normalized data set of ratings;
   b. a ratings dataset splitter module, which divides randomly the said aggregated ratings dataset into three separated dataset: training set, validation set and test set;
   c. a dense dataset extractor module, which extracts a dense sub ratings dataset from said training and validation datasets;
   d. a CodeBook Construction module, which generates a codebook from a source domain that discovers the ratings patterns to be transferred later to the target domain;
   e. a CodeBook Closeness module, which calculates closeness measures between user clusters and item clusters in a given codebook;
   f. a Multiple Domains CodeBook Transfer (MDCBT) module, which generates a model that predicts the ratings on the target domain;
   g. a MDCBT Wrapper module, which selects a subset form, to source domains code books, for said target domain, while improving the final model accuracy; and

h. an on-line Recommendation Engine module, which generates a recommendation for the target domain.

Aggregating
events in each
source domain — 11

Splitting to:
train,
validation and
test — 12

Extracting the
pattern in
each source
domain — 13

Transferring
the patterns
from the source
to the target
domain — 14

Generate
recommendatio
n to the target
domain — 15

# Fig. 1

201

Rating events
aggregator

202

Rating Dataset
Splitter

203

Dense Dataset
Extractor

204

CodeBook
Construction

208

Recommendation
Model

MDCBT
Wrapper

207

CodeBook
Closeness

205

On –Line
Recommendations

MDCBT

206

209

# Fig. 2

---

**CodeBook Construction**

**Input**:

- *ST –Sourcedomain training rating dataset<u, i ,r>. User ids range from 0 to p-1, and Item ids range from 0 to q-1.*
- *SV - Source domain training validation dataset<u, i ,r>. User ids range from 0 to p-1, and Item ids range from 0 to q-1.*
- *K - Number of possible user clusters.*
- *L - Number of possible item clusters.*

**Output**:

- *B – Source domain CodeBook a KxL matrix specifying for each user-cluster-index and item-cluster-index pair the rating pattern according the values in ST).*
- *U – Source domain user vector, specifying for each user the relevant cluster index according to the given CodeBook.*
- *V – Source domain item vector, specifying for each item the relevant cluster index according to the given CodeBook.*

**Method**:

1. For iid ←0 .. q-1 do
2.     Set randomly $V^{(0)}_{iid}$ from {0, .. *L-1* }
3. For uid ←0 ..p-1 do
4.     Set randomly $U^{(0)}_{uid}$ from {0, .. *K-1* }
5. Calculate current CodeBook – $B^{(t)}$ , using update rule in equation "2".
6. Set t =1
7. While (*!Termination_Condition*) do
8.     For uid ←0 ..p-1 do
9.       $U^{(t)}_{uid} = \arg\min_{j,j\in\{0...K-1\}} \sum_{iid\in ST_{uid}} (ST_{uid,iid} - B^{(t)}[j][V^{(t-1)}_{iid}])^2$
10.     Calculate current CodeBook – $B^{(t)}$ , using update rule in equation "2".
11.     For iid ←0 .. q-1 do
12.       $V^{(t)}_{uid} = \arg\min_{j,j\in\{0...L-1\}} \sum_{uid\in ST_{iid}} (ST_{uid,iid} - B^{(t)}[U^{(t)}_{uid}][j])^2$
13.     Calculate current CodeBook – $B^{(t)}$ , using update rule in equation "2".
14.     Evaluate current model (*calculate RMSE* ) on *SV* data set
15.     t = t+1.
16. Return $U^{(t)}$, $V^{(t)}$, $B^{(t)}$ with minumum RMSE on *SV*.

# Fig. 3

**Multiple Domains Code Book Transfer**

**Input:**

- *TT –Target domain training rating dataset<u, i ,r>. User ids ranges from 0 to p-1, and Item ids ranges from 0 to q-1*

- *TV – Target domain validation rating dataset <u, i ,r> (same structure as in TT).*

- *N – number of source domains;*

- *$B_0$, $B_1$ ,...$B_{n-1}$ – N source domains Codebooks. Each codebook matrix contains $k_n$ user clusters and $l_n$ item clusters.*

- *$WB_0$, $WB_1$,... $WB_{n-1}$ – a priory weight for each codebook, indicating the assumed relevance of each source domain to the target domain.*

**Output:**

- *U – the user matrix, specifying for each user u, the relevant cluster index in each source domain.*

- *V – the item matrix, specifying for each item i, the relevant cluster index in each source domain.*

- *$\alpha_0$ ,$\alpha_1$, ...$\alpha_{n-1}$ – the weight of each source domain in the final prediction model.*

**Method:**

1. For iid $\leftarrow$0 .. q-1 do

2.     For n $\leftarrow$0 .. N-1 do

3.         Set randomly $V^{(0)}_{iid,n}$ from {0, .. $l_n$-1 }

4. For n $\leftarrow$0 .. N-1 do

5.     Set $\alpha^{(0)}_n$ to 1/N

6. set t = 1

7. While (*!Termination_Codition*) do

8.     For uid $\leftarrow$0 .. p-1 do   // *USE Parallel Computation for each uid*

9.       Use local search method to find better assignment for $U_{uid,*}$ minimizing:

$$\sum_{iid \in TT(uid)}(TT_{uid,iid} -\textstyle\sum_{n=0}^{N-1}\alpha_n^{(t-1)} B_n [U_{uid,n}][V_{iid,n}^{(t-1)}])^2$$

10.       Set $U^{(t)}_{uid,*}$ cluster indices according to the returned solution,

11.     For iid $\leftarrow$0 .. q-1 do   // *USE Parallel Computation for each iid*

12.       Use local search method to find better assignment for $V_{iid,*}$ minimizing

$$\sum_{uid \in TT(iid)} (TT_{uid,iid} -\textstyle\sum_{n=0}^{N-1}\alpha_n^{(t-1)} B_n [U_{uid,n}^{(t)}][V_{iid,n}])^2$$

13.       Set $V^{(t)}_{iid,*}$ cluster indices according to the returned solution,

14.       Pre-process required computations for the alpha's optimization problem.

15.     Update $\alpha_0$ ,$\alpha_1$, ...$\alpha_{n-1}$ solving the following optimization problem

$$\vec{a} = \min_{\alpha_n} \sum_{TT}(TT_{uid,iid} -\textstyle\sum_{n=0}^{N-1}\alpha_n B_n [U_{uid,n}^{(t)}][V_{iid,n}^{(t)}])^2$$

16.     Evaluate current model (*calculate RMSE* ) on *TV* data set.

17.     t = t + 1.

18. Return $V^{(t)}$, $V^{(t)}$, $\alpha_0^{(t)}$, $\alpha_1^{(t)}$, ... $\alpha_{n-1}^{(t)}$ with minumum RMSE on *TV*.

# Fig. 4

**MDCBT Wrapper**

**Input:**

- *TT –Target domain training rating dataset <u, i ,r >. User ids ranges from 0 to p-1, and Item ids ranges from 0 to q-1*

- *TV – Target domain validation rating dataset <u, i ,r > (same structure as in TT).*

- *N – number of source domains;*

- $B_0$ , $B_1$ ,...$B_{n-1}$ *– N source domains Code Book. Each code book matrix contains $k_n$ user clusters and $l_n$ item clusters.*

**Output:**

- *$WB_0$, $WB_1$,... $WB_{n-1}$ – a priory weight for each code book, indicating the assumed relevance of each source domain to the target domain.*

- *Suboptimal MDCBT mode based on most significant available code books.*

**Method:**

1. For n $\leftarrow$ 0 .. N-1 do

2.     Generate MDCBT model with the $n^{th}$ source domain code book

3.     Set  $WB_n$ to the (1-RMSE) on TV

4. *MDCBT\*\** $\leftarrow$ the MDCBT model with minimum RMSE on TV

5. *MDCBT\*\*\_error* $\leftarrow$ the RMSE of *MDCBT\*\** on TV

6. Order the domain according to their *WBs* values decently.

7. set t = 2

8. While (*!Termination_Codition*) do

9.     *CB_SET* $\leftarrow$ select a subset of size t, with the most significant source domain code books (according to the WB's values).

10.     *cMDCBT* $\leftarrow$ Generate MDCBT model with *CB_SET*

11.     *c_error* $\leftarrow$ the RMSE of *cMDCBT* on TV

12.     IF *c_error* < *MDCBT\*\*_error*

13.         update *MDCBT\*\** and *MDCBT\*\*_error* to the current evaluated model.

14.     t = t +1

15. Return *MDCBT\*\** with all parameters and configurations.

# Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- TALMUD: transfer learning for multiple domains. **MORENO, O. ; SHAPIRA, B. ; ROKACH, L. ; SHANI, G.** Proceedings of the 21st ACM international conference on Information and knowledge management. ACM, October 2012, 425-434